# FASCICULE DE BREVET EUROPEEN

(11) **EP 0 612 574 B1**
(45) Date de publication et mention de la délivrance du brevet: **17.04.1996**
(21) Numéro de dépôt: 94420049.2
(22) Date de dépôt: 14.02.1994
(51) Int. Cl.: B23B 13/02

(54) **Embarreur à entraînement multiple**
Stangenführung mit mehreren Antrieben
Bar-loader with multiple driving-devices

(30) Priorité: 17.02.1993 FR 9301960
(43) Date de publication de la demande: 31.08.1994
(73) Titulaire: BECHET FRERES (SOCIETE ANONYME), F-74300 Cluses (FR)
(72) Inventeur: Frugier, Guy, F-74300 Cluses (FR); Gerard, Jean-Robert, F-74300 Cluses (FR); Mazzucco, Daniel, F-74100 Annemasse (FR)
(74) Mandataire: Poncet, Jean-François

(56) Documents cités:
- EP-A- 0 161 210
- EP-A- 0 212 077
- US-A- 4 402 642

## Description

La présente invention concerne les dispositifs permettant d'alimenter un tour automatique, c'est-à-dire permettant d'amener dans la zone de travail du tour occupée par les outils l'extrémité d'une barre métallique à usiner. L'invention s'applique en particulier aux embarreurs pour tour automatique (à poupée mobile ou à poupée fixe) selon le préambule de la revendication 1 et comme connû par le document EP-A-0 212 077.

On connaît un premier type d'embarreur pour tour automatique, dans lequel un guide-barre tubulaire est formé d'une première demi-coquille et d'une deuxième demi-coquille mobiles l'une par rapport à l'autre entre une position fermée dans laquelle les deux demi-coquilles sont rapprochées l'une de l'autre pour former un guide tubulaire creux ouvert aux deux extrémités, et une position ouverte dans laquelle les demi-coquilles sont séparées l'une de l'autre pour permettre l'introduction latérale d'une barre dans le canal intérieur des demi-coquilles. Dans le document CH-A-593 746, les demi-coquilles sont monobloc. Dans le document EP-A-0 161 210, les demi-coquilles sont discontinues, formant des paliers disjoints supportant la barre. Dans les deux réalisations, une poussette, en forme de cylindre métallique, est montée à coulissement dans le canal intérieur du guide-barre et est sollicitée par des moyens mécaniques d'avance de barre. Pour assurer le déplacement en translation longitudinale de la poussette tout au long du guide-barre, le guide-barre est pourvu d'une fente latérale traversée par un drapeau qui relie la poussette à une chaîne d'entraînement extérieure actionnée par un moteur. Le drapeau coulisse dans cette fente du guide-barre lors du coulissement de la poussette.

Le document EP-A-0 212 077 décrit un perfectionnement dans lequel deux supports rotatifs parallèles comportent à leur périphérie des gorges longitudinales venant en correspondance deux à deux pour former des guides tubulaires creux de diamètres différents pour guider des barres de diamètres différents. L'entraînement de la barre est assuré par une poussette coulissant dans le tube guide-barre et reliée à une chaîne d'entraînement extérieure par un drapeau traversant une fente longitudinale du guide-barre.

De telles dispositions à un ou plusieurs guide-barres munis de fentes pour le passage de drapeaux d'entraînement sont des structures couramment utilisées et acceptables pour des barres de diamètre suffisant, c'est-à-dire dont le rapport entre le diamètre de la barre et la largeur de la fente est assez grand pour que la fente ne constitue pas un moyen de coincement de la barre. En pratique, de telles structures s'utilisent pour des barres dont le diamètre est compris entre 2 millimètres et 10 millimètres ou plus. Par contre, ces dispositifs ne conviennent pas pour des barres de diamètre inférieur à 2 millimètres ou 1,5 millimètres, car les barres risquent alors de se coincer dans la fente latérale de passage de drapeau.

On a déjà proposé par ailleurs depuis longtemps, par exemple dans le document US-A-2 602 212 ou dans le document US-A-4 402 642, une structure d'embarreur avec un tube guide-barre dépourvu de toute fente latérale. La poussette logée à l'intérieur du tube est entraînée en translation par un élément flexible en forme de tige hélicoïdale ou de chaîne à boules qui coulisse axialement dans le tube guide-barre, et dans un tube de réserve, l'élément flexible étant entraîné en translation longitudinale par une roue dentée disposée dans la zone antérieure du tube de réserve et en prise avec l'élément flexible. Pour l'introduction d'une barre dans le tube guide-barre, celui-ci est monté à pivotement pour que sa partie proche du tour puisse être décalée latéralement et permette l'introduction d'une barre par coulissement axial. Le tube est ensuite ramené dans l'axe du tour pour l'entraînement de la barre par la poussette. On peut concevoir qu'un tel dispositif peut convenir pour des barres de plus petit diamètre, puisque le tube guide-barre ne comporte aucune fente dans laquelle la barre de petit diamètre risquerait de se coincer. Ce dispositif est toutefois inadapté pour une introduction automatique d'une barre dans l'embarreur. En outre, un tel dispositif s'avère inefficace pour l'entraînement de barres de gros diamètres, car l'élément flexible introduit une incertitude de positionnement axial de la barre dans le tour. Et une forme hélicoïdale de l'élément flexible augmente l'usure des tubes de guidage.

Le problème proposé par la présente invention est de concevoir une nouvelle structure d'embarreur permettant l'introduction et le guidage non seulement de barres de diamètre supérieur à 2 millimètres, mais également de barres de diamètre inférieur à 2 millimètres. En pratique, on cherche à utiliser des barres pouvant aller de 0,8 à 10 millimètres environ.

Pour atteindre ces objets ainsi que d'autres, l'embarreur selon l'invention comprend deux guide-barre montés sur un même support mobile déplaçable sur un bâti entre une première position dans laquelle le premier guide-barre est aligné sur l'axe principal du tour et une seconde position dans laquelle le second guide-barre est aligné sur l'axe principal du tour, les diamètres respectifs des guide-barre étant différents l'un de l'autre pour permettre l'introduction de barres de diamètres différents appropriés.

De préférence, le premier guide-barre est du type à entraînement par une chaîne sans fin longitudinale décalée latéralement et tendue entre un pignon moteur et un pignon de retour, reliée à une poussette axiale dans le guide-barre par un drapeau traversant une fente longitudinale du guide-barre ; le second guide-barre est du type à entraînement par un câble flexible coulissant axialement dans le guide-barre et dans un tube de réserve et entraîné par une roue d'entraînement.

Selon un mode de réalisation avantageux, les moyens pour pousser axialement la barre dans les guide-barre comprennent un moteur unique et une transmission mécanique pour transmettre le mouvement du moteur unique soit au pignon moteur du premier guide-barre soit à la roue d'entraînement du second guide-barre.

D'autres objets, caractéristiques et avantages de la présente invention ressortiront de la description suivante de modes de réalisation particuliers, faite en relation avec les figures jointes, parmi lesquelles :
- la figure 1 est une vue schématique de dessus d'un embarreur selon un mode de réalisation de la présente invention ;
- la figure 2 est une vue schématique de côté en coupe longitudinale du premier guide-barre de la figure 1 ;
- la figure 3 est une vue de côté schématique en coupe longitudinale du second guide-barre de la figure 1 ;
- la figure 4 est une coupe transversale selon le plan A-A de la figure 1; et
- la figure 5 est une vue en coupe transversale selon le plan B-B de la figure 1, montrant les moyens d'entraînement de barre.

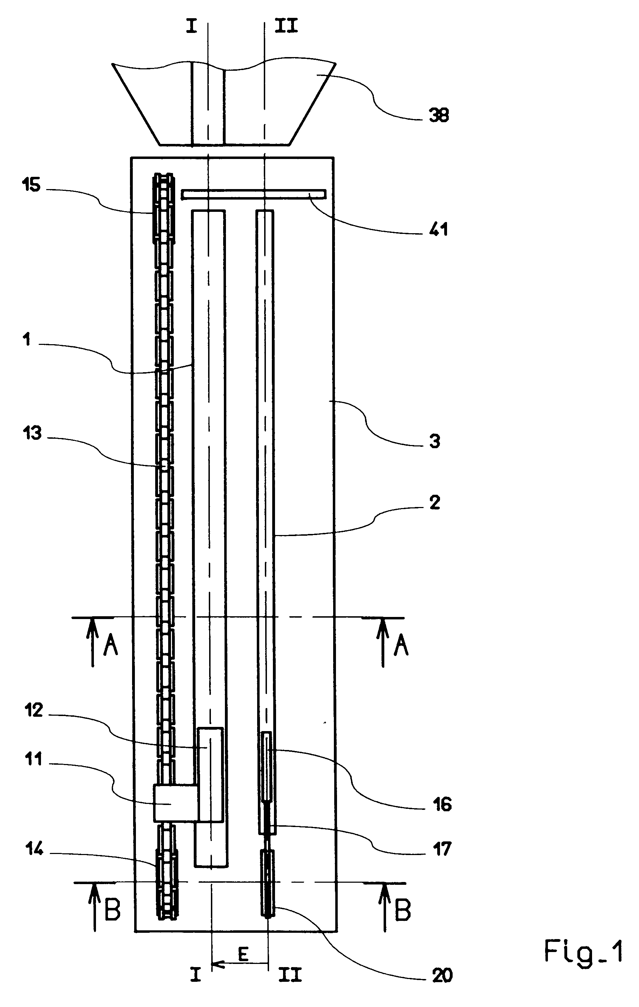

Comme le représente la figure 1 en vue de dessus, l'embarreur selon l'invention comprend un premier guide-barre 1 et au moins un second guide-barre 2, qui sont montés tous deux sur un même support mobile 3 en des positions décalées latéralement l'une de l'autre selon un entraxe E entre leurs axes longitudinaux respectifs I-I et II-II.

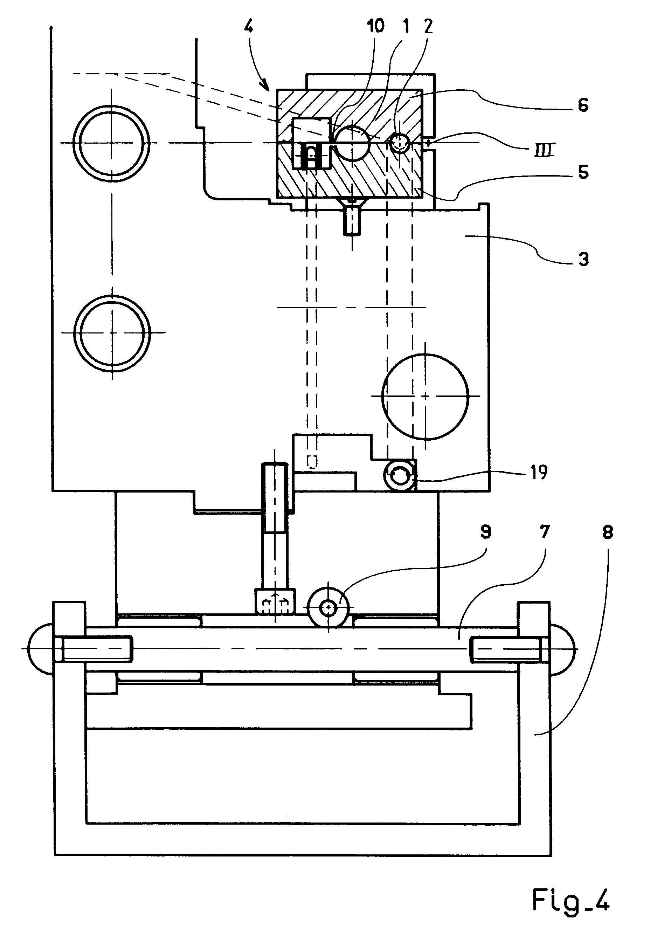

En réalité, comme illustré sur la figure 4, le premier guide-barre 1 et le second guide-barre 2 sont constitués de deux canaux 1 et 2 principaux ménagés dans un même élément tubulaire 4 formé d'une demi-coquille inférieure 5 fixe sur le support mobile 3 et d'une demi-coquille supérieure 6 articulée sur la demi-coquille inférieure 5 selon un axe de rotation latéral longitudinal III. Le basculement de la demi-coquille supérieure 6 permet d'ouvrir l'élément tubulaire 4 et de positionner une barre soit dans le canal principal de premier guide-barre 1 soit dans le canal principal de second guide-barre 2. La demi-coquille supérieure 6 est ensuite refermée et la barre est ensuite poussée vers le tour par des moyens appropriés.

Dans le mode de réalisation représenté sur les figures, les deux canaux principaux des guide-barre 1 et 2 sont disposés parallèlement et décalés latéralement l'un par rapport à l'autre selon un entraxe E approprié. Le support mobile 3 est monté sur des guides transversaux 7 du bâti 8, sur lesquels il peut coulisser entre une première position et une seconde position. Dans sa première position, le support mobile est tel que l'axe longitudinal I-I du premier guide-barre 1 est aligné sur l'axe principal du tour. Dans sa seconde position, le support mobile 3 est tel que l'axe longitudinal II-II du second guide-barre 2 est aligné avec l'axe principal du tour. Des moyens de blocage 9 sont prévus pour bloquer le support mobile 3 dans l'une et l'autre de ses première et seconde positions.

Dans le mode de réalisation représenté, le premier guide-barre 1 est du type à entraînement par chaîne et drapeau : une telle structure, telle qu'illustrée sur les figures, comprend une fente latérale longitudinale 10 ménagée dans la paroi entourant le canal du premier guide-barre 1, pour le passage d'un drapeau 11 reliant la poussette 12 à une chaîne d'entraînement 13. La poussette 12 coulisse dans le canal du premier guide-barre 1. La chaîne d'entraînement 13 est une chaîne sans fin longitudinale décalée latéralement par rapport au canal du premier guide-barre 1 et tendue entre un pignon moteur 14 et un pignon de retour 15 à axes transversaux disposés respectivement au voisinage de l'une et l'autre des extrémités du guide-barre. Le drapeau 11 est orienté latéralement à l'opposé du second guide-barre.

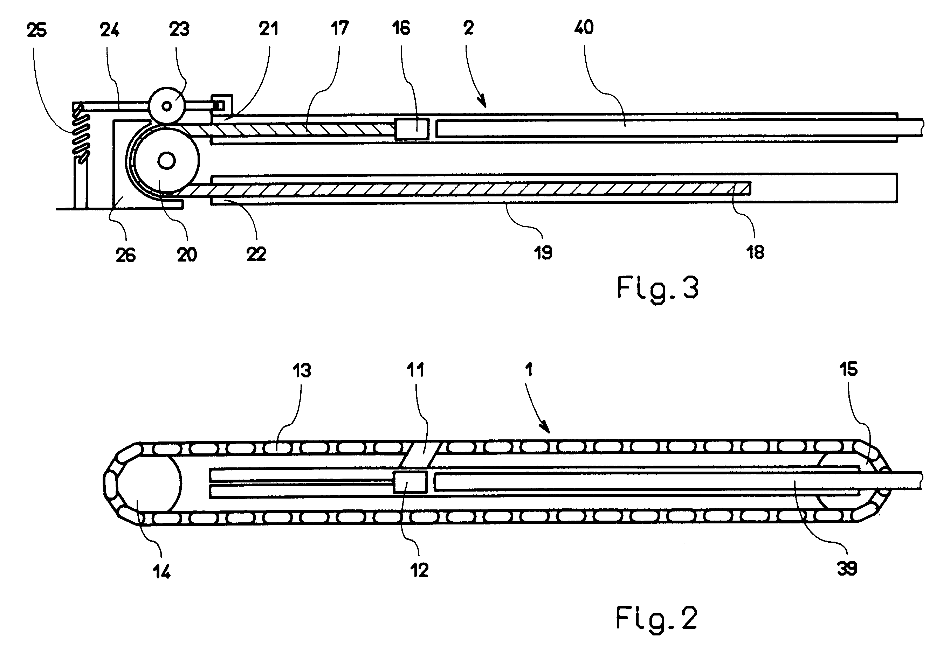

Le second guide-barre 2 est du type à entraînement par câble flexible axial : la poussette 16 de second guide-barre coulisse axialement dans le canal principal du second guide-barre 2, et est solidaire d'un câble flexible 17 dont la première extrémité coulisse axialement dans le canal principal du second guide-barre 2. La seconde extrémité 18 du câble flexible coulisse axialement dans un tube guide-câble de réserve 19 parallèle au canal principal du guide-barre 2 et disposé au-dessous de celui-ci, comme l'illustre la figure 3. Une portion intermédiaire du câble flexible 17 passe autour d'une roue d'entraînement 20 disposée à proximité des extrémités postérieures respectives 21 et 22 du canal principal de second guide-barre 2 et du tube guide-câble de réserve 19. Dans son passage autour de la roue d'entraînement 20, le câble flexible 17 passe entre la roue d'entraînement 20 et un galet presseur 23 monté sur un bras articulé 24 sollicité par un ressort 25 pour presser le galet 23 contre le câble flexible 17, et pour presser ainsi le câble flexible 17 contre la roue d'entraînement 20. Dans le reste de son parcours autour de la roue d'entraînement 20, le câble flexible 17 est en outre guidé par un guide postérieur 26 formant avec la roue d'entraînement un canal courbe dans lequel le câble flexible 17 peut coulisser à faible jeu.

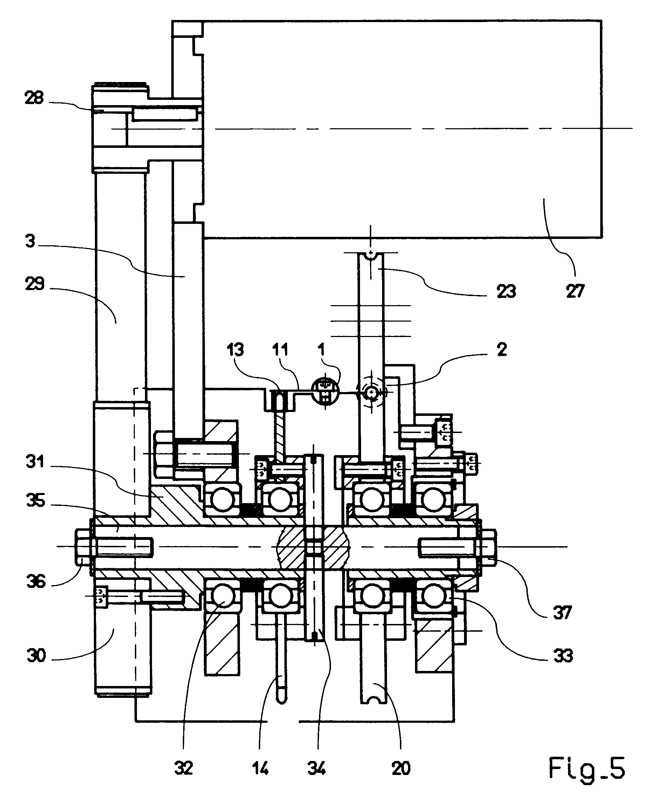

Dans le mode de réalisation représenté sur la figure 5, le pignon moteur 14 du premier guide-barre 1 et la roue d'entraînement 20 du second guide-barre 2 sont entraînés par un moteur électrique unique 27. Le moteur unique 27 entraîne, par l'intermédiaire de son pignon de bout d'arbre 28 et d'une courroie crantée 29, une roue dentée 30 montée en bout d'un arbre moteur 31. L'arbre moteur 31 tourillonne dans des paliers à roulement 32 et 33 du support mobile 3, le moteur 27 étant lui-même porté par le support mobile 3.

L'arbre moteur 31, orienté transversalement par rapport à l'axe longitudinal de l'embarreur, porte un disque d'embrayage 34 monté coulissant sur l'arbre moteur 31 et bloqué en rotation sur ledit arbre moteur. Le disque d'embrayage 34 est solidaire d'un axe intérieur 35 monté à coulissement dans un alésage axial de l'arbre moteur 31, sa position axiale étant fixée par deux vis axiales d'extrémité 36 et 37. Par coulissement de l'axe intérieur 35, on peut déplacer axialement le disque d'embrayage 34 dans une première position représentée sur la figure, dans laquelle le disque 34 vient en appui contre le flanc du pignon moteur 14 de premier guide-barre 1 pour l'entraîner en rotation ; dans la seconde position, par déplacement du disque d'embrayage 34 vers la droite sur la figure, le disque d'embrayage 34 vient en appui contre le flanc de la roue d'entraînement 20 de second guide-barre 2 pour l'entraîner en rotation. Le pignon moteur 14 et la roue d'entraînement sont coaxiaux par rapport à l'arbre moteur 31. Dans le mode de réalisation représenté, le pignon 14 et la roue 20 sont respectivement montés sur l'arbre moteur 31 par l'intermédiaire de roulements à billes, et se trouvent calés axialement sur l'arbre.

Le premier guide-barre est adapté pour la poussée de barres de diamètres relativement importants, par exemple des barres dont le diamètre est compris entre 2 et 10 millimètres. Le second guide-barre 2 est par contre adapté pour recevoir et pousser des barres de plus petit diamètre, par exemple des barres de diamètre compris entre 0,8 et 2 millimètres environ.

On pourrait utiliser, selon l'invention, des guide-barre dont la structure diffère de celles qui ont été décrites, et l'on pourrait aussi prévoir un embarreur muni de trois tubes guide-barre ou de plus de trois tubes.

Le fonctionnement du dispositif représenté sur les figures est le suivant : pour l'alimentation en barres de diamètres relativement élevés, on utilise le premier guide-barre 1. On positionne pour cela le support mobile 3 dans sa première position représentée sur la figure 1, pour placer l'axe longitudinal I-I du premier guide-barre 1 dans l'axe principal du tour schématiquement représenté par la partie 38. Les vis d'actionnement 36 et 37 sont manoeuvrées pour amener le disque d'embrayage 34 en appui contre le flanc du pignon moteur 14, comme représenté sur la figure 5. L'alimentation du moteur 27 provoque alors la rotation du pignon 14, qui entraîne la chaîne 13, le drapeau 11, la poussette 12. La barre 39 de la figure 2 est alors repoussée en direction du tour.

Pour utiliser l'embarreur avec une barre de plus petit diamètre, on utilise de préférence le second guide-barre 2, en déplaçant le support mobile 3 dans sa seconde position pour amener l'axe longitudinal II-II du second guide-barre 2 en alignement avec l'axe principal du tour 38 : le support mobile 3 est pour cela déplacé vers la gauche sur la figure 1, comme le représente la flèche d'entraxe E. On déplace simultanément le disque d'embrayage 34 par manoeuvre des vis 36 et 37, pour l'amener en appui contre le flanc de la roue d'entraînement 20. La rotation du moteur 27 provoque alors l'entraînement de la roue d'entraînement 20, qui actionne le câble flexible 17 et la poussette 16. La barre 40 représentée sur la figure 3 est alors repoussée en direction du tour 38.

Le dispositif peut avantageusement être associé à un moyen de détection d'extrémité de barre 41, représenté sur la figure 1. Ce dispositif de détection d'extrémité de barre 41 est avantageusement un capteur optique, se présentant sous la forme d'un cadre optique apte à produire un flux lumineux dans un plan transversal sensiblement perpendiculaire à l'axe longitudinal ou axe de progression de barre. Le cadre optique est apte à détecter la variation du flux lumineux lors de la traversée du plan par l'extrémité de la barre à usiner. Ce moyen de détection est associé à un circuit de traitement de signal permettant de produire un signal de détection de présence d'extrémité de barre. Les signaux de détection sont envoyés à des moyens de commande pour alimenter le moteur 27. On remarquera que le cadre optique formant le détecteur 41 est utilisable indifféremment avec le premier guide-barre 1 ou le second guide-barre 2.

Pour introduire une barre dans l'un ou l'autre des guide-barre 1 ou 2, on relève la demi-coquille supérieure 6 représentée sur la figure 4, puis on rabaisse la demi-coquille supérieure 6 pour fermer les canaux des deux guide-barre 1 et 2.

La présente invention n'est pas limitée aux modes de réalisation qui ont été explicitement décrits, mais elle en inclut les diverses variantes et généralisations contenues dans le domaine des revendications ci-après.

## Revendications

1. Embarreur pour tour automatique, comprenant un premier guide-barre (1) monté sur un bâti (8) et associé à des moyens pour introduire une barre dans le premier guide-barre (1) et à des moyens pour pousser axialement la barre dans le premier guide-barre (1) et dans le tour, caractérisé en ce qu'il comprend :
- au moins un second guide-barre (2) monté sur le même bâti (8) et associé à des moyens pour introduire une barre dans le second guide-barre et à des moyens pour pousser axialement la barre dans le second guide-barre et dans le tour,
- un support mobile (3), portant le premier guide-barre (1) et le second guide-barre (2) en des positions décalées latéralement l'une de l'autre, le support mobile (3) étant déplaçable sur le bâti (8) entre une première position dans laquelle le premier guide-barre (1) est aligné sur l'axe principal du tour et une seconde position dans laquelle le second guide-barre (2) est aligné sur l'axe principal du tour,
- les diamètres respectifs des guide-barre (1,2) étant différents l'un de l'autre pour permettre l'introduction de barres de diamètres différents appropriés.

2. Embarreur selon la revendication 1, caractérisé en ce que :
- le premier guide-barre (1) est du type à entraînement par une chaîne (13) sans fin longitudinale décalée latéralement et tendue entre un pignon moteur (14) et un pignon de retour (15), la chaîne (13) étant reliée à une poussette (12) axiale dans le premier guide-barre par un drapeau (11) traversant une fente longitudinale (10) du premier guide-barre (1),
- le second guide-barre (2) est du type à entraînement par un câble flexible (17) coulissant axialement dans le canal de second guide-barre (2) et dans un tube guide-câble de réserve (19) et entraîné par une roue d'entraînement (20).

3. Embarreur selon la revendication 2, caractérisé en ce que les moyens pour pousser axialement la barre dans les guide-barre (1, 2) comprennent :
- un moteur unique (27),
- une transmission mécanique pour transmettre le mouvement du moteur unique (27) soit au pignon moteur (14) du premier guide-barre (1) soit à la roue d'entraînement (20) du second guide-barre (2).

4. Embarreur selon la revendication 3, caractérisé en ce que la transmission mécanique comprend un disque d'embrayage (34) monté coulissant sur un arbre moteur (31) entraîné par le moteur (27) et bloqué en rotation sur ledit arbre moteur (31), le disque d'embrayage (34) pouvant coulisser entre une première position dans laquelle il vient en appui contre le flanc du pignon moteur (14) de premier guide-barre (1) pour l'entraîner en rotation, et une seconde position dans laquelle il vient en appui contre le flanc de la roue d'entraînement (20) de second guide-barre (2)pour l'entraîner en rotation, le pignon moteur (14) et la roue d'entraînement (20) étant coaxiaux par rapport à l'arbre moteur (31).

5. Embarreur selon l'une quelconque des revendications 1 à 4, caractérisé en ce que :
- sur le support mobile (3), les deux canaux principaux des guide-barre (1, 2) sont disposés parallèlement et décalés latéralement l'un par rapport à l'autre selon un entraxe (E) approprié,
- le support mobile (3) est monté sur des guides transversaux (7) du bâti (8), sur lesquels il peut coulisser entre sa première position et sa seconde position,
- des moyens de blocage (9) sont prévus pour bloquer le support mobile (3) dans l'une et l'autre de ses première et seconde positions.

6. Embarreur selon la revendication 2, caractérisé en ce que le drapeau (11) d'entraînement de premier guide-barre (1) est orienté latéralement à l'opposé du second guide-barre (2).

7. Embarreur selon l'une quelconque des revendications 1 à 6, caractérisé en ce que les deux guide-barre (1, 2) sont constitués d'un élément tubulaire unique (4) formé d'une demi-coquille inférieure (5) fixée sur le support mobile (3) et d'une demi-coquille supérieure (6) articulée sur la demi-coquille inférieure (5) selon un axe de rotation latéral longitudinal (III) permettant l'ouverture et la fermeture simultanées des deux canaux principaux de guide-barre (1, 2).

## Claims

1. Bar feeder for an automatic lathe, comprising a first bar guide (1) mounted on a frame (8) and associated with means for introducing a bar into the first bar guide (1), and with means for axially pushing the bar into the first bar guide (1) and into the lathe, characterised in that it comprises:
- at least one second bar guide (2) mounted on the same frame (8) and associated with means of introducing a bar into the second bar guide , and with means for axially pushing the bar into the second bar guide and into the lathe,
- a mobile support (3) carrying the first bar guide (1), and the second bar guide (2) in positions offset laterally from one another, the mobile support (3) being displaceable on the frame (8) between a first position in which the first bar guide (1) is aligned on the main axis of the lathe, and a second position in which the second bar guide (2) is aligned on the main axis of the lathe,
- the respective diameters of the bar guides (1, 2) being different from one another in order to enable bars of different appropriate diameters to be introduced.

2. Bar feeder according to claim 1, characterised in that:
- the first bar guide (1) is of the type driven by a longitudinal endless chain (13) offset laterally and stretched between a drive pinion (14) and a return pinion (15), the chain (13) being connected to an axial carriage (12) in the first bar guide by a tag (11) passing through a longitudinal slot (10) in the first bar guide (1),
- the second bar guide (2) is of the type driven by a flexible cable (17) sliding axially in the channel of the second bar guide (2) and in a reserve cable-guiding tube (19), and driven by a drive wheel (20).

3. Bar feeder according to claim 2, characterised in that the means of axially pushing the bar into the bar guides (1, 2) comprise:
- a single motor (27),
- a mechanical transmission for transmitting the movement of the single motor (27) either to the drive pinion (14) of the first bar guide (1) or to the drive wheel (20) of the second bar guide (2).

4. Bar feeder according to claim 3, characterised in that the mechanical transmission comprises a clutch disc (34) slidingly mounted on a drive shaft (31) driven by the motor (27) and secured against rotation on said drive shaft (31), the clutch disc (34) being capable of sliding between a first position in which it comes into contact with the side of the drive pinion (14) of the first bar guide (1) in order to cause it to rotate, and a second position in which it comes into contact with the side of the drive wheel (20) of the second bar guide (2) in order to cause it to rotate, the drive pinion (14) and the drive wheel (20) being coaxial with respect to the drive shaft (31).

5. Bar feeder according to any one of claims 1 to 4, characterised in that:
- on the mobile support (3) the two main channels of the bar guides (1, 2) are disposed in parallel and are offset laterally with respect to one another with an appropriate centre distance between axes (E),
- the mobile support (3) is mounted on transverse guides (7) of the frame (8), on which said guides it can slide between its first position and its second position,
- locking means (9) are provided to lock the mobile support (3) in one and the other of its first and second positions.

6. Bar feeder according to claim 2, characterised in that the drive tag (11) of the first bar guide (1) is oriented laterally in the opposite direction to the second bar guide (2).

7. Bar feeder according to any one of claims 1 to 6, characterised in that the two bar guides (1, 2) are made up of a single tubular member (4) made up of a lower half-shell (5) fixed on the mobile support (3), and of an upper half-shell (6) articulated on the lower half-shell (5) about a lateral and longitudinal axis of rotation (III) enabling simultaneous opening and closing of the two main channels of the bar guides (1, 2)

## Patentansprüche

1. Stangenschieber für eine automatische Drehmaschine mit einer ersten Stangenführung (1), die auf einem Maschinenrahmen (8) gelagert ist und der Mittel zum Einführen einer Stange in die erste Stangenführung (1) sowie Mittel zum axialen Vorschieben der Stange in der ersten Stangenführung (1) und in die Drehmaschine zugeordnet sind, gekennzeichnet durch
- wenigstens eine zweite Stangenführung (2), die auf demselben Maschinenrahmen (8) gelagert ist und der Mittel zum Einführen einer Stange in die zweite Stangenführung sowie Mittel zum axialen Vorschieben der Stange in der zweiten Stangenführung und in die Drehmaschine zugeordnet sind,
- einen beweglichen Support (3), der die ersten Stangenführung (1) und die zweite Stangenführung (2) mit seitlichem Abstand voneinander trägt und der auf dem Maschinenrahmen (8) zwischen einer ersten Stellung, in der die erste Stangenführung (1) mit der Hauptachse der Drehmaschine fluchtet, und einer zweiten Stellung verschiebbar ist, in der die zweite Stangenführung (2) mit der Hauptachse der Drehmaschine fluchtet,
- wobei die beiden Stangenführungen (1, 2) unterschiedliche Durchmesser haben, so daß Stangen verschiedener Durchmesser eingeführt werden können.

2. Stangenschieber nach Anspruch 1, dadurch gekennzeichnet,
- daß die erste Stangenführung (1) einen Antrieb mit einer in Längsrichtung verlaufenden, endlosen Kette (13) hat, die seitlich versetzt und zwischen einem Antriebsrand (14) und einem Umlenkrad (15) gespannt ist und die mit einem in der ersten Stangenführung verlaufenden, axialen Schieber (12) verbunden ist über einen Finger (11), der durch einen Längsschlitz (10) in der ersten Stangenführung (1) hindurchgreift,
- und daß die zweite Stangenführung (2) einen Antrieb mit einer biegsamen Achse (17) hat, die in axialer Richtung in dem Kanal der zweiten Stangenführung (2) und in einem Führungsspeicherrohr (19) verschiebbar tat und von einem Antriebsrad (20) angetrieben wird.

3. Stangenschieber nach Anspruch 2, dadurch gekennzeichnet, daß die Mittel zum axialen Vorschieben der Stange in den Stangenführungen (1, 2) umfassen:
- einen einzigen Motor (27) und
- eine mechanische Transmission zur Übertragung des Drehmomentes des einzigen Motors (27) sowohl auf das Antriebsrad (14) der ersten Stangenführung (1) als auch auf das Antriebsrad (20) der zweiten Stangenführung (2).

4. Stangenschieber nach Anspruch 3, dadurch gekennzeichnet, daß die mechanische Transmission eine Kupplungsplatte (34) aufweist, die auf einer vom Motor (27) angetriebenen Antriebswelle (31) verschiebbar, jedoch drehfest gelagert ist und die zwischen einer ersten Stellung, in der sie an einer Flanke des Antriebsrades (14) der ersten Stangenführung (1) anliegt und diese dadurch in Drehung versetzt, und einer zweiten Stellung verschiebbar ist, in der sie an einer Flanke des Antriebsrades (20) der zweiten Stangenführung (2) anliegt und diese dadurch in Drehung versetzt, wobei das Antriebsrad (14) und das Antriebsrad (20) koaxial zur Antriebswelle (31) sind.

5. Stangenschieber nach einem der Ansprüche 1 bis 4, gekennzeichnet durch die folgenden Merkmale:
- auf dem beweglichen Support (3) sind die beiden Hauptkanäle der Stangenführungen (1, 2) parallel nebeneinander und seitlich zueinander mit einem Achsabstand (E) versetzt angeordnet,
- der bewegliche Support (3) ist auf Querführungen (7) des Maschinenrahmens (8) gelagert, auf denen er zwischen seiner ersten und seiner zweiten Stellung verschiebbar ist,
- es sind Verriegelungseinrichtungen (9) zum Blockieren des beweglichen Supports (3) in seiner ersten und in seiner zweiten Stellung vorgesehen.

6. Stangenschieber nach Anspruch 2, dadurch gekennzeichnet, daß der Finger (11) für den Vorschub in der ersten Stangenführung (1) gegenüber der zweiten Stangenführung (2) zur Seite hin absteht.

7. Stangenschieber nach einem der vorhergehenden Ansprüche, dadurch gekennzeichnet, daß die beiden Stangenführungen (1, 2) aus einem einzigen Hohlelement (4) bestehen, das aus einer auf dem beweglichen Support (3) befestigten, unteren Halbbacke (5) und einer an dieser über eine sich in Längrichtung erstreckende, seitliche Schwenkachse (III) angelenkten, oberen Halbbacke (6) zusammengesezt ist, wodurch ein gleichzeitiges Öffnen und Schließen der beiden Hauptkanäle der Stangenführungen (1, 2) möglich ist.
